# EUROPEAN PATENT APPLICATION

(11) **EP 4 660 770 A1**
(43) Date of publication of application: **10.12.2025**
(21) Application number: 23919334.5
(22) Date of filing: 22.09.2023
(51) Int. Cl.: G06F 3/04845

(54) **IMAGE DISPLAY METHOD, APPARATUS AND DEVICE, AND READABLE STORAGE MEDIUM**

(30) Priority: 03.02.2023 CN 202310091907
(71) Applicant: Raytron Technology Co., Ltd., Yantai, Shandong 264006 (CN)
(72) Inventor: ZHANG, Zhonggang, Yantai, Shandong 264006 (CN); LIU, Jigang, Yantai, Shandong 264006 (CN)
(74) Representative: Studio Torta S.p.A.
(86) International application number: PCT/CN2023/120611
(87) International publication number: WO 2024/159770

(57) **Abstract**

An image display method, apparatus and device, and a readable storage medium, relating to the technical field of image display. The method comprises: acquiring a visible light image and an infrared image of a target scene; using one of the visible light image and the infrared image as a top-layer image, using the other image as a bottom-layer image, and covering the bottom-layer image with the top-layer image so as to display the top-layer image on a display screen; capturing an erasing action of a user on the display screen, and determining a region of interest according to the erasing action; and hiding the top-layer image at the region of interest to display the corresponding bottom-layer image at the region of interest. According to the technical solution disclosed in the present application, one of a visible light image and an infrared image is used for displaying a region of interest, and the other image is used for displaying a panorama, such that a picture-in-picture display effect is achieved; and additionally, picture-in-picture display is achieved by means of an erasing action of a user, such that the flexibility and the display effect of image display are improved, and the whole picture is guaranteed while the user views the region of interest.

## Description

This application claims the priority to Chinese Patent Application No.202310091907.2, titled "IMAGE DISPLAY METHOD, APPARATUS AND DEVICE, AND READABLE STORAGE MEDIUM", filed on February 03, 2023 with the China National Intellectual Property Administration, which is incorporated herein by reference in its entirety.

### FIELD

The present disclosure relates to the technical field of image display, and more specifically, to a method, apparatus and device for displaying an image, and a readable storage medium.

### BACKGROUND

Infrared imaging and visible light imaging are two widely used imaging means at present, each with limitations. Infrared images are unaffected by lighting conditions or weather, but they typically exhibit low contrast and lack rich texture details. Visible light images offer high contrast and abundant texture details, but their performance degrades significantly in conditions such as fog, or nighttime environments. An image captured by a single sensor typically provides only partial information, which fails to meet market requirements. In recent years, camera devices that combine visible light imaging and infrared imaging have developed rapidly. The camera devices can capture both visible light images and infrared images simultaneously. In a case that a photographing scene is in well-lit environments, full detailed information can be obtained by observing the visible light image. In a case that photographing is performed at night or obstructions are present, highlight information of high-heat targets can be obtained by observing the infrared image. A dual-light camera device ensures that users can obtain required information in most scenarios, and is currently widely applied in various fields such as outdoor, security and military.

In infrared-visible light photographing scenes, the conventional dual-light fusion method is implemented by overlaying an infrared image on a visible light image, and regulating the transparency of the entire infrared image from opaque to transparent, to display the visible light image. During this process, the visibility of the infrared image decreases gradually. The infrared image and the visible light image cannot be observed simultaneously through this observation method, which has low flexibility.

In summary, a technical problem to be addressed by those skilled in the art is to improve the flexibility of image display.

### SUMMARY

In view of this, an object of the present disclosure is to provide a method, an apparatus and a device for displaying an image and a readable storage medium, to improve the flexibility of image display.

To achieve the above object, the following technical solutions are provided according to the present disclosure.

A method for displaying an image is provided. The method includes:
acquiring a visible light image and an infrared image of a target scene;
determining one of the visible light image and the infrared image as a top-layer image and the other of the visible light image and the infrared image as a bottom-layer image, and overlaying the top-layer image on the bottom-layer image to display the top-layer image on a display screen;
capturing an erasing action of a user on the display screen, and determining a region of interest based on the erasing action; and
hiding a portion of the top-layer image that is within the region of interest to display a portion of the bottom-layer image that is within the region of interest.

In an embodiment, after the hiding a portion of the top-layer image that is within the region of interest to display a portion of the bottom-layer image that is within the region of interest, the method further includes:
receiving an erasing action cancellation instruction sent by the user, determining a region of interest based on a most recently captured erasing action that has not been cancelled, and re-overlaying the portion of the top-layer image that is within the region of interest on the portion of the bottom-layer image that is within the region of interest for displaying.

In an embodiment, before the capturing an erasing action of a user on the display screen, the method further includes:
providing multiple types of brushes to allow the user to select a brush among the multiple types of brushes for performing the erasing action.

In an embodiment, after the hiding a portion of the top-layer image that is within the region of interest to display a portion of the bottom-layer image that is within the region of interest, the method further includes:
receiving a restoration instruction sent by the user, and re-overlaying the hidden top-layer image on the displayed bottom-layer image, to re-display the top-layer image completely.

In an embodiment, the determining one of the visible light image and the infrared image as a top-layer image and the other of the visible light image and the infrared image as a bottom-layer image, and overlaying the top-layer image on the bottom-layer image to display the top-layer image on a display screen, includes:
determining the visible light image as the top-layer layer image and the infrared image as the bottom-layer image, and overlaying the visible light image on the infrared image to establish a first display mode;
determining the infrared image as the top-layer image and the visible light image as the bottom-layer image, and overlaying the infrared image on the visible light image to establish a second display mode; and
receiving a display mode selection instruction sent by the user, and displaying on the display screen in a display mode selected from the first display mode and the second display mode according to the display mode selection instruction.

In an embodiment, the acquiring a visible light image and an infrared image of a target scene includes:
acquiring the visible light image and the infrared image of the target scene captured by a dual-light imaging device;
   or,
acquiring the visible light image of the target scene captured by a visible light device, and acquiring the infrared image of the target scene captured by a thermal imaging device.

In an embodiment, when the hiding a portion of the top-layer image that is within the region of interest to display a portion of the bottom-layer image that is within the region of interest, the method further includes:
downsizing at least one of the visible light image and the infrared image; and
displaying the downsized image at a preset position outside the region of interest on the display screen.

An apparatus for displaying an image is provided. The apparatus includes: an acquisition module, a first display module, a determination module, and a second display module.

The acquisition module is configured to acquire a visible light image and an infrared image of a target scene.

The first display module is configured to determine one of the visible light image and the infrared image as a top-layer image and the other of the visible light image and the infrared image as a bottom-layer image, and overlay the top-layer image on the bottom-layer image to display the top-layer image on a display screen.

The determination module is configured to capture an erasing action of a user on the display screen, and determine a region of interest based on the erasing action.

The second display module is configured to hide a portion of the top-layer image that is within the region of interest, to display a portion of the bottom-layer image that is within the region of interest.

A device for displaying an image is provided. The device includes: a memory and a processor.

The memory is configured to store a computer program.

The processor is configured to perform, when executing the computer program, the method for displaying the image according to any one of the above embodiments.

A readable storage medium is provided. The readable storage medium stores a computer program, and the computer program, when executed by a processor, causes the processor to perform the method for displaying the image according to any one of the above embodiments.

A method, an apparatus and a device for displaying an image, and a readable storage medium are provided according to the present disclosure. The method includes: acquiring a visible light image and an infrared image of a target scene; determining one of the visible light image and the infrared image as a top-layer image and the other of the visible light image and the infrared image as a bottom-layer image, and overlaying the top-layer image on the bottom-layer image to display the top-layer image on a display screen; capturing an erasing action of a user on the display screen, and determining a region of interest based on the erasing action; and hiding a portion of the top-layer image that is within the region of interest to display a portion of the bottom-layer image that is within the region of interest.

In the above technical solution disclosed in the present disclosure, one of the acquired visible light image and the acquired infrared image of the target scene is determined as the top-layer image and the other is determined as the bottom-layer image. The top-layer image is completely overlaid on the bottom-layer image and is therefore displayed on the display screen. An erasing action of the user on the display screen is captured, a region of interest is determined based on the erasing action, and a portion of the top-layer image that is within the region of interest is hidden, to display a portion of the bottom-layer image that is within the region of interest. In this way, a picture-in-picture display effect is achieved by rendering one of the visible light image and the infrared image in the region of interest and rendering the other in the panoramic background that is complementary to the region of interest, improving the flexibility of image display, and enabling simultaneous observation of both the region of interest and the entire scene. In addition, picture-in-picture display is implemented based on the erasing action of the user, enabling the user to observe the region of interest more conveniently and flexibly, and effectively improving the flexibility and the display effect of image display.

### BRIEF DESCRIPTION OF THE DRAWINGS

To clearly illustrate the technical solutions in the embodiments of the present disclosure or in the conventional technology, drawings to be used in the descriptions of the embodiments of the present disclosure or in the conventional technology are introduced simply hereinafter. It is apparent that the drawings described below only illustrate the embodiments of the present disclosure. For those skilled in the art, other drawings may be obtained according to the disclosed drawings without any creative effort.
FIG. 1 is a flowchart of a method for displaying an image according to an embodiment of the present disclosure;
FIG. 2 is a schematic diagram of a user performing an erasing action in a first display mode to display a portion of an infrared image that is within a region of interest according to an embodiment of the present disclosure;
FIG. 3 is a schematic diagram of a user performing an erasing action in a second display mode to display a portion of a visible light image that is within a region of interest according to an embodiment of the present disclosure;
FIG. 4 is a schematic structural diagram of an apparatus for displaying an image according to an embodiment of the present disclosure; and
FIG. 5 is a schematic structural diagram of a device for displaying an image according to an embodiment of the present disclosure.

### DETAILED DESCRIPTION

In infrared-visible light photographing scenes, the conventional dual-light fusion method is implemented by overlaying an infrared image on a visible light image, and regulating the transparency of the entire infrared image from opaque to transparent, to display the visible light image. During this process, the visibility of the infrared image decreases gradually. The infrared image and the visible light image cannot be observed simultaneously through this observation method, which has low flexibility.

Therefore, a method, an apparatus and a device for displaying an image, and a readable storage medium are provided according to the present disclosure, to improve the flexibility of image display.

Hereinafter technical solutions of embodiments of the present disclosure are described clearly and completely in conjunction with the drawings of the embodiments of the present disclosure. Apparently, the embodiments described below are only some embodiments, rather than all the embodiments of the present disclosure. Any other embodiments obtained by those skilled in the art based on the embodiments in the present disclosure without creative efforts shall fall within the protection scope of the present disclosure.

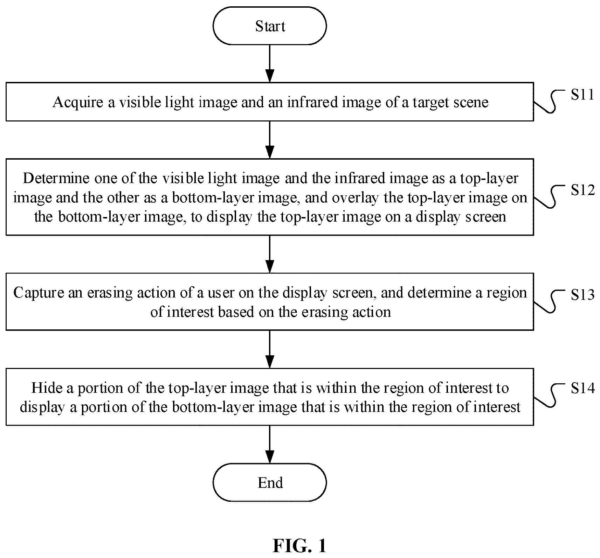

Referring to FIG. 1, a flowchart of a method for displaying an image according to an embodiment of the present disclosure is illustrated. The method for displaying the image according to an embodiment of the present disclosure includes steps S11 to S14.

In step S11, a visible light image and an infrared image of a target scene are acquired.

The execution subject of the method for displaying the image according to the embodiment of the present disclosure may be a device for image display. The device for displaying the image may include or be connected with a display screen for displaying an image. The device for displaying the image is provided with a thermal imaging APP. When displaying an image through the thermal imaging APP, the user starts the APP and turns on a picture-in-picture display function (or a glass-wiping image display function) of the thermal imaging APP.

When displaying an image, a dual-light imaging device acquires a visible light image and an infrared image of the target scene. Specifically, the dual-light imaging device simultaneously acquires a visible light image and an infrared image of the target scene from the same perspective. The target scene is a scene of which an image is to be displayed or a scene of which an image is to be observed by the user.

In step S12, one of the visible light image and the infrared image is determined as a top-layer image and the other of the visible light image and the infrared image is determined as a bottom-layer image, and the top-layer image is overlaid on the bottom-layer image, to display the top-layer image on a display screen.

Based on step S11, one of the acquired visible image and the acquired infrared image of the target scene is determined as the top-layer image and the other is determined as the bottom-layer image. The top-layer image is arranged to completely coincide with the bottom-layer image (where the top-layer image and the bottom-layer image are arranged in the same manner to ensure the correspondence between them). The top-layer image fully covers the bottom-layer image. As a result, the top-layer image is displayed on the display screen, that is, the top-layer image is overlaid on top of the bottom-layer image.

In an embodiment, the displaying is implemented in the following two modes.

In a first display mode, the visible light image is determined as the top-layer layer image and the infrared image is determined as the bottom-layer image. The visible light image fully covers the infrared image, and the two are completely coincide with each other. The visible light image is displayed, overlaid on top of the infrared image.

In a second display mode, the infrared image is determined as the top-layer layer image and the visible light image is determined as the bottom-layer image. The infrared image fully covers the visible light image, and the two are completely coincide with each other. The infrared image is displayed, overlaid on top of the visible light image.

In step S13, an erasing action of a user on the display screen is captured, and a region of interest is determined based on the erasing action.

Based on that the top-layer image is displayed on the display screen, the user performs an erasing action of glass wiping on the display screen. The user may perform the erasing action of glass wiping on the display screen using a tool such as a finger or a brush and the like to determine the region of interest.

Accordingly, the device for displaying the image captures and identifies the erasing action of the user, and identifies the region of interest based on the erasing action of the user. A contour of the region of interest (i.e., the region erased by the user) is determined based on the erasing action of the user. Each time the user's finger or brush touches and then removes from the display screen, it is counted as one erasing action.

The region of interest is determined based on the user performing an erasing action on the display screen, enhancing the flexibility of image display and providing intuitive operation and observation.

In step S14, a portion of the top-layer image that is within the region of interest is hidden to display a portion of the bottom-layer image that is within the region of interest.

After the region of interest is determined, the portion of the top-layer image that is within the region of interest on the display screen is hidden, so as to display the bottom-layer image that is at the bottom layer and is within the region of interest. Thus, the bottom-layer image displays the region of interest, and the top-layer image displays a panoramic background, to achieve a picture-in-picture display effect, thereby improving the flexibility of image display.

In an embodiment, in the above-mentioned first display mode (that is, the visible light image is overlaid and displayed on top of the infrared image), the portion of the visible light image that is within the region of interest in the first display mode is hidden, and the portion of the infrared image that is below the visible light image and is within the region of interest is displayed. The infrared image is rendered in the region of interest and the visible light image is rendered in the panoramic background. Thus, simultaneous observation of a visible light image of the background and an infrared image of the region of interest is enabled, achieving observation of the infrared image of the region of interest while maintaining an overall view, thereby improving the flexibility and interest of image display and observation.

In the above-mentioned second display mode (that is, the infrared image is overlaid and displayed on top of the visible light image), the portion of the infrared image that is within the region of interest in the second display mode is hidden, and the portion of the visible light image that is below the infrared image and is within the region of interest is displayed. The visible light image is rendered in the region of interest and the infrared image is rendered in the panoramic background. Thus, simultaneous observation of an infrared image of the background and an visible light image of the region of interest is enabled, achieving observation of the visible image of the region of interest while maintaining an overall view, thereby improving the flexibility and interest of image display and observation.

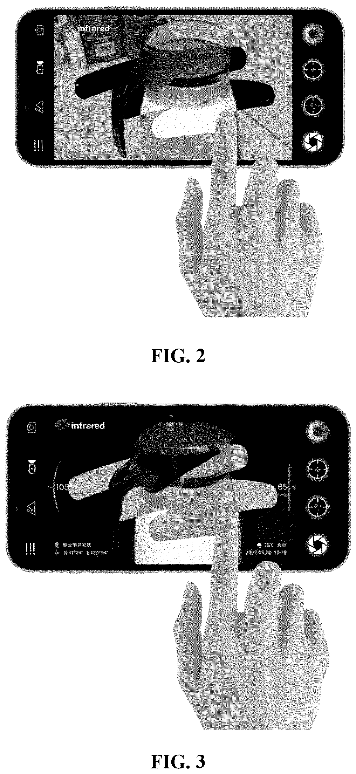

As the user performs the erasing action, a display state of the erased region (i.e., the region of interest) is switched from displaying a portion of the top-layer image that is within the region of interest to displaying a portion of the bottom-layer image that is within the region of interest, that is, the top-layer image is erased to display the bottom-layer image. Reference may be made to FIG. 2 and FIG. 3. FIG. 2 illustrates a schematic diagram of a user performing an erasing action in a first display mode to display a portion of an infrared image that is within a region of interest according to an embodiment of the present disclosure. FIG. 3 illustrates a schematic diagram of a user performing an erasing action in a second display mode to display a portion of a visible light image that is within a region of interest according to an embodiment of the present disclosure. In a case that a target display mode is the first display mode, as the user performs the erasing action, a portion of the visible light image that is within the erased region (i.e., the region of interest) on the device for displaying the image is erased, and the infrared image at the bottom layer is displayed. Thus, the infrared image is displayed through erasing in a glass-wiping manner, with the visible light image serving as background, providing intuitive and flexible observation of the infrared image within the region of interest. In a case that the target display mode is the second display mode, as the user performs the erasing action, a portion of the infrared image that is within the erased region (i.e., the region of interest) on the device for displaying the image is erased, and the visible light image at the bottom layer is displayed. Thus, the visible light image is displayed through erasing in a glass-wiping manner, with the infrared image serving as background, providing intuitive and flexible observation of the visible light image at the region of interest.

As can be seen from the above, compared with the regulating the transparency of an entire infrared image from opaque to transparent to display the visible-light image in the conventional method, according to the present disclosure, a top-layer image is overlaid on a bottom-layer image, and an erasing action of the user is captured. A region of interest is identified and determined based on the erasing action, and a portion of the top-layer image that is within the region of interest is hidden, to display a portion of the bottom-layer image that is within the region of interest. Thus, the portion of the bottom-layer image is displayed within the region of interest, and the portion of the top-layer image is displayed within the remaining area, that is, a picture-in-picture display effect is achieved, thereby improving the flexibility and interest of image display. In this case, the user can simultaneously observe both the portion of the bottom-layer image that is within the region of interest and the portion of the top-layer image that is within the remaining area, such that the user can obtain more information from simultaneously displayed top-layer image and bottom-layer image, thereby improving the interest and experience for image observation.

In the above technical solution disclosed in the present disclosure, one of the acquired visible light image and the acquired infrared image of the target scene is determined as the top-layer image and the other is determined as the bottom-layer image. The top-layer image is completely overlaid on the bottom-layer image and is therefore displayed on the display screen. An erasing action of the user on the display screen is captured, a region of interest is determined based on the erasing action, and a portion of the top-layer image that is within the region of interest is hidden, to display a portion of the bottom-layer image that is within the region of interest. In this way, a picture-in-picture display effect is achieved by rendering one of the visible light image and the infrared image in the region of interest and rendering the other in the panoramic background that is complementary to the region of interest, improving the flexibility of image display, and enabling simultaneous observation of both the region of interest and the entire scene. In addition, picture-in-picture display is implemented based on the erasing action of the user, enabling the user to observe the region of interest more conveniently and flexibly, and effectively improving the flexibility and the effect of image display.

In the method for displaying the image according to an embodiment of the present disclosure, after the hiding a portion of the top-layer image that is within the region of interest, to display a portion of the bottom-layer image that is within the region of interest, the method may further include:
receiving an erasing action cancellation instruction sent by the user, determining a region of interest based on a most recently captured erasing action that has not been cancelled, and re-overlaying the portion of the top-layer image that is within the region of interest on the portion of the bottom-layer image that is within the region of interest for displaying.

According to the present disclosure, after the device for displaying the image hides the portion of the top-layer image that is within the region of interest to display the portion of the bottom-layer image that is within the region of interest, the user may send an erasing action cancellation instruction according to actual requirements. Specifically, the user may send the erasing action cancellation instruction by clicking a cancellation button, inputting a text for cancellation, or the like.

After receiving the erasing action cancellation instruction sent by the user, the device for displaying the image determines a region of interest (simply referred to as a target region of interest) corresponding to the most recently captured erasing action that has not been cancelled. Then, the portion of the top-layer image that is within the target region of interest is re-overlaid on the corresponding portion of bottom-layer image, to re-display the portion of the top-layer image that is within the target region of interest. For example, in a case that the user performs three erasing actions including an erasing action A, an erasing action B, and an erasing action C (where these three erasing actions are performed sequentially, and the erasing action C is the most recently performed), each erasing action corresponds to a region of interest. Specifically, the erasing action A corresponds to a region of interest A, the erasing action B corresponds to a region of interest B, and the erasing action C corresponds to a region of interest C. The erasing action C is most recently performed, and has not been cancelled. In this case, if the user sends an erasing action cancellation instruction, it refers to a cancellation instruction for the erasing action C. The region of interest C corresponding to the erasing action C is determined as the region of interest corresponding to the most recently captured erasing action that has not been cancelled (that is, the region of interest C is the target region of interest). The portion of the top-layer image that is within the region of interest C is re-overlaid on the portion of the bottom-layer image that is displayed within the region of interest C, and is therefore re-displayed. Similarly, when the user sends the erasing action cancellation instruction again, it refers to a cancellation instruction for the erasing action B. The region of interest B corresponding to the erasing action B serves as the target region of interest, and the portion of the top-layer image that is within the region of interest B is re-overlaid on the portion of the bottom-layer image that is displayed within the region of interest B and is therefore re-displayed.

The user may send the erasing action cancellation instruction multiple times. Each time receiving the erasing action cancellation instruction sent by the user, the device for displaying the image performs the above operation once. The erasing action cancellation instruction sent by the user is responded until no portion of bottom-layer image is displayed on the display screen.

Through the above process, the display of the portion of the bottom-layer image that is within the most recently determined region of interest is cancelled, to re-display the portion of the top-layer image that is within the most recently determined region of interest. Thus, the user can alternately observe the bottom-layer image and the top-layer image in these regions, thereby improving the flexibility of image observation. In addition, cancelling the display of the portion of the bottom-layer image that is within the region of interest according to the erasing action cancellation instruction improves the convenience and flexibility of image display, and enhances user operability.

In the method for displaying the image according to an embodiment of the present disclosure, before the capturing an erasing action of a user on the display screen, the method may further include:
providing multiple types of brushes to allow the user to select a brush among the multiple types of brushes for performing the erasing action.

According to the present disclosure, the device for displaying the image provides a variety of types of brushes on the display screen for the user to select, and the user uses the selected brush to perform an erasing action on the display screen. The device for displaying the image may provide brushes with different thicknesses for the user to select, thereby improving the efficiency and experience for performing the erasing action.

In addition, the user may further directly touch the display screen with a finger to perform the erasing action.

In the method for displaying the image according to an embodiment of the present disclosure, after the hiding the portion of the top-layer image that is within the region of interest to display the portion of the bottom-layer image that is within the region of interest, the method may further include:
receiving a restoration instruction sent by the user, and re-overlaying the hidden portion of the top-layer image on the displayed portion of the bottom-layer image, to re-display the top-layer image completely.

In the present disclosure, when the user needs to exit the picture-in-picture display, the user sends a restoration instruction. In an embodiment, the user sends the restoration instruction by clicking a one-click restore button on the display screen or the like. Accordingly, the device for displaying the image receives the restoration instruction sent by the user.

Upon receiving the restoration instruction sent by the user, the device for displaying the image re-overlays the hidden portion of the top-layer image on the displayed portion of the bottom-layer image, to re-display the top-layer image completely, that is, to restore to an initial display.

In an embodiment, in the first display mode, after receiving the restoration instruction sent by the user, the hidden portion of the visible light image is re-overlaid on the displayed portion of the infrared image, to re-display the visible light image completely on the display screen. In the second display mode, after receiving the restoration instruction sent by the user, the hidden portion of the infrared image is overlaid on the displayed portion of the visible light image, to re-display the infrared image completely on the display screen.

Based on the above, a current display on the display screen can be restored to an initial display, to meet the user requirement for display and improve the user experience.

In the method for displaying the image according to an embodiment of the present disclosure, the determining one of the visible light image and the infrared image as a top-layer image and the other as a bottom-layer image, and overlaying the top-layer image on the bottom-layer image to display the top-layer image on a display screen includes:
determining the visible light image as the top-layer layer image and the infrared image as the bottom-layer image, and overlaying the visible light image on the infrared image to establish a first display mode;
determining the infrared image as the top-layer image and the visible light image as the bottom-layer image, and overlaying the infrared image on the visible light image to establish a second display mode; and
receiving a display mode selection instruction sent by the user, and displaying on the display screen in a display mode selected from the first display mode and the second display mode according to the display mode selection instruction.

In an embodiment of the present disclosure, the visible light image is determined as the top-layer image and the infrared image is determined as the bottom-layer image, and the visible light image is overlaid on the infrared image to establish the first display mode. Alternatively, the infrared image is determined as the top-layer image and the visible image is determined as the bottom-layer image, and the infrared image is overlaid on the visible light image to establish the second display mode.

After the first display mode and the second display mode are established, the user sends a display mode selection instruction to the device for displaying the image according to actual requirements. Specifically, after the first display mode and the second display mode are established, the device for displaying the image displays a first display mode selection button and a second display mode selection button on the display screen, or simultaneously displays the first display mode and the second display mode on the display screen, allowing the user to send the display mode selection instruction by clicking or inputting a text, or the like. The device for displaying the image receives the display mode selection instruction sent by the user. Then, the device for displaying the image displays on the display screen in a display mode specified by the display mode selection instruction. Specifically, if the display mode selection instruction corresponds to the first display mode, the visible light image is displayed on the display screen, that is, in the first display mode. If the display mode selection instruction corresponds to the second display mode, the infrared image is displayed on the display screen, that is, in the second display mode.

Through the above implementations, the image is displayed according to the requirements and preferences of the user, improving the user experience for image display.

In the method for displaying the image according to an embodiment of the present disclosure, the acquiring a visible light image and an infrared image of a target scene includes:
acquiring the visible light image of the target scene captured by a dual-light imaging device;
   or,
acquiring the visible light image of the target scene captured by a visible light device, and acquiring the infrared image of the target scene captured by a thermal imaging device.

In an embodiment of the present disclosure, the visible light image and the infrared image of the target scene are captured by the dual-light imaging device simultaneously. Alternatively, since the visible light device typically captures only visible light images, and the thermal imaging device typically captures only infrared images, the two devices are used in combination. In the combined manner, the visible light device is used to capture the visible light image of the target scene, and simultaneously the thermal imaging device is used to capture the infrared image of the target scene.

For example, in an application scenario where a thermal imager plug-in is connected to a mobile phone for use, the mobile phone serves as a visible light device to capture visible light images by using a built-in camera, while the thermal imager plug-in functions as a thermal imaging device to capture infrared images. For example, in a case that a mobile phone is provided with both a visible light camera and an infrared camera, the mobile phone serves as a dual-light imaging device to capture visible light images and infrared images simultaneously. In the above two application scenarios, the mobile phone may be installed with a thermal imaging APP, a picture-in-picture display function may be directly started and used, and the captured images are directly displayed on a screen of the mobile phone. By directly performing an erasing action on the screen of the mobile phone, the picture-in-picture display effect is achieved.

In an embodiment, when acquiring the visible light image and the infrared image of the target scene, the device for displaying the image acquires the visible light image and the infrared image of the target scene captured by the dual-light imaging device. Alternatively, the device for displaying the image acquires the visible light image of the target scene captured by the visible light device, and simultaneously acquires the infrared image of the target scene captured by the thermal imaging device.

Based on the above, the visible light image and the infrared image of the target scene are acquired, and the quality of the acquired visible light image and infrared image of the target scene can be improved.

In the method for displaying the image according to an embodiment of the present disclosure, when the hiding a portion of the top-layer image that is within the region of interest, to display a portion of the bottom-layer image that is within the region of interest, the method further includes:
downsizing at least one of the visible light image and the infrared image; and
displaying the downsized image at a preset position outside the region of interest on the display screen.

According to the present disclosure, the device for displaying the image hides the portion of the top-layer image that is within the region of interest, to display the portion of the bottom-layer image that is within the region of interest. In addition, the device for displaying the image downsizes at least one of the visible light image and the infrared image, and displays the downsized visible light image and/or the downsized infrared image at a preset position (for example, any one of the upper left corner, the upper right corner, the lower left corner, and the lower right corner) outside the region of interest on the display screen. Displaying the downsized image at a preset position outside the region of interest on the display screen can not only reduce affecting the display of the portion the bottom-layer image within the region of interest on the display screen, but also reduce obstruction on the normally displayed image.

For simultaneously displaying the downsized visible light image and the downsized infrared image, two positions are selected from preset positions outside the region of interest. One position displays the downsized visible light image, and the other position displays the downsized infrared image. This configuration enables the user to observe a panoramic visible light image and/or a panoramic infrared image of the target scene while observing the top-layer image and the bottom-layer image, thereby facilitating the user to acquire more information.

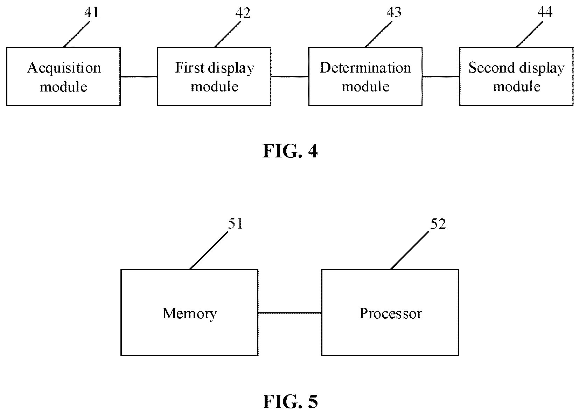

An apparatus for displaying an image is further provided according to an embodiment of the present disclosure. Referring to FIG. 4, a schematic structural diagram of an apparatus for displaying an image according to an embodiment of the present disclosure is illustrated. The apparatus includes an acquisition module 41, a first display module 42, a determination module 43, and a second display module 44.

The acquisition module 41 is configured to acquire a visible light image and an infrared image of a target scene.

The first display module 42 is configured to determine one of the visible light image and the infrared image as a top-layer image and the other of the visible light image and the infrared image as a bottom-layer image, and overlay the top-layer image on the bottom-layer image to display the top-layer image on a display screen.

The determination module 43 is configured to capture an erasing action of a user on the display screen, and determine a region of interest based on the erasing action.

The second display module 44 is configured to hide a portion of the top-layer image that is within the region of interest, to display a portion of the bottom-layer image that is within the region of interest.

The apparatus for displaying the image according to an embodiment of the present disclosure further includes an instruction receiving module.

The instruction receiving module is configured to, after the portion of the top-layer image that is within the region of interest is hidden to display the bottom-layer image that is within the region of interest receive an erasing action cancellation instruction sent by the user, determine a region of interest based on a most recently captured erasing action that has not been cancelled, and re-overlay the portion of the top-layer image that is within the region of interest on the portion of the bottom-layer image that is within the region of interest for displaying.

The apparatus for displaying the image according to an embodiment of the present disclosure further includes a multiple-brush providing module.

The multiple-brush providing module is configured to provide, before an erasing action of a user on the display screen is captured, multiple types of painting brushes, where the user selects a brush among the multiple types of brushes to perform the erasing action.

The apparatus for displaying the image according to an embodiment of the present disclosure may further include a restoration module.

The restoration module is configured to, after the portion of the top-layer image that is within the region of interest is hidden to display the portion of the bottom-layer image that is within the region of interest, receive a restoration instruction sent by the user, and re-overlay the hidden portion of the top-layer image on the displayed portion of the bottom-layer image, to re-display the top-layer image completely.

In the apparatus for displaying the image according to an embodiment of the present disclosure, the first display module 42 includes a first establishing unit, a second establishing unit, and a receiving unit.

The first establishing unit is configured to determine the visible light image as the top-layer layer image and the infrared image as the bottom-layer image, and overlay the visible light image on the infrared image to establish a first display mode.

The second establishing unit is configured to determine the infrared image as the top-layer image and the visible light image as the bottom-layer image, and overlay the infrared image on the visible light image to establish a second display mode.

The receiving unit is configured to receive a display mode selection instruction sent by the user, and display on the display screen in a display mode selected from the first display mode and the second display mode according to the display mode selection instruction.

In the apparatus for displaying the image according to an embodiment of the present disclosure, the acquisition module 41 includes a first acquisition unit.

The first acquisition unit is configured to acquire the visible light image of the target scene captured by a dual-light imaging device.

Alternatively, the acquisition module 41 includes a second acquisition unit and a third acquisition unit.

The second acquisition unit is configured to acquire the visible light image of the target scene captured by a visible light device.

The third acquisition unit is configured to acquire the infrared image of the target scene captured by a thermal imaging device.

The apparatus for displaying the image according to an embodiment of the present disclosure further includes a downsizing module and a third display module.

The downsizing module is configured to downsize at least one of the visible light image and the infrared image when the portion of the top-layer image that is within the region of interest is hidden to display the portion of the bottom-layer image that is within the region of interest.

The third display module is configured to display the downsized image at a preset position outside the region of interest on the display screen.

A device for displaying an image is further provided according to an embodiment of the present disclosure. Referring to FIG. 5, a schematic structural diagram of a device for displaying an image according to an embodiment of the present disclosure is illustrated. The device includes a memory 51 and a processor 52.

The memory 51 is configured to store a computer program.

The processor 52 is configured to implement, when executing the computer program stored in the memory 51, the following steps of:
acquiring a visible light image and an infrared image of a target scene; determining one of the visible light image and the infrared image as a top-layer image and the other of the visible light image and the infrared image as a bottom-layer image, and overlaying the top-layer image on the bottom-layer image to display the top-layer image on a display screen; capturing an erasing action of a user on the display screen, and determining a region of interest based on the erasing action; and hiding a portion of the top-layer image that is within the region of interest to display a portion of the bottom-layer image that is within the region of interest.

A readable storage medium is further provided according to an embodiment of the present disclosure. The readable storage medium stores a computer program. The computer program, when executed by a processor, causes the processor to implement the following steps of:
acquiring a visible light image and an infrared image of a target scene; determining one of the visible light image and the infrared image as a top-layer image and the other of the visible light image and the infrared image as a bottom-layer image, and overlaying the top-layer image on the bottom-layer image to display the top-layer image on a display screen; capturing an erasing action of a user on the display screen, and determining a region of interest based on the erasing action; and hiding a portion of the top-layer image that is within the region of interest to display a portion of the bottom-layer image that is within the region of interest.

The readable storage medium may include: a U disk, a mobile hard disk, a read-only memory (ROM), a random access memory (RAM), a magnetic disk or an optical disk, etc., which stores program codes.

For description of a related part of the apparatus and the device for displaying the image, and the readable storage medium according to the embodiments of the present disclosure, reference may be made to the detailed description of the method for displaying the image according to the embodiment of the present disclosure, which is not repeated herein.

It should be noted that in the present disclosure, the relationship terms "first", "second" and the like are only used herein to distinguish one entity or operation from another, rather than to necessitate or imply that an actual relationship or order exists between the entities or operations. Moreover, the terms "comprise", "include", or any other variants thereof are intended to encompass a non-exclusive inclusion, such that the process, method, article, or device including a series of elements further includes not only those listed elements but also those elements that are not explicitly listed, or the elements that are inherent to such process, method, article, or device. Unless expressively limited otherwise, a process, method, article or device limited by "comprising/including a(n)..." does not exclude existence of another identical element in such process, method, article or device. In addition, the part of the above technical solution according to the embodiments of the present disclosure that is consistent with the technical solution in the conventional technology is not described in detail to avoid redundancy.

Based on the above description of the disclosed embodiments, those skilled in the art are capable of implementing or using the present disclosure. It is apparent for those skilled in the art to make many modifications to these embodiments. The general principle defined herein may be applied to other embodiments without departing from the scope of the present disclosure. Therefore, the present disclosure should not be limited to the embodiments disclosed herein, but has the widest scope in accordance to the concept and the novel features disclosed herein.

## Claims

1. A method for displaying an image, comprising:
acquiring a visible light image and an infrared image of a target scene;
determining one of the visible light image and the infrared image as a top-layer image and the other of the visible light image and the infrared image as a bottom-layer image, and overlaying the top-layer image on the bottom-layer image to display the top-layer image on a display screen;
capturing an erasing action of a user on the display screen, and determining a region of interest based on the erasing action; and
hiding a portion of the top-layer image that is within the region of interest to display a portion of the bottom-layer image that is within the region of interest.

2. The method for displaying the image according to claim 1, wherein after the hiding a portion of the top-layer image that is within the region of interest to display a portion of the bottom-layer image that is within the region of interest, the method further comprises:
receiving an erasing action cancellation instruction sent by the user, determining a region of interest based on a most recently captured erasing action that has not been cancelled, and re-overlaying the portion of the top-layer image that is within the region of interest on the portion of the bottom-layer image that is within the region of interest for displaying.

3. The method for displaying the image according to claim 1, wherein before the capturing an erasing action of a user on the display screen, the method further comprises:
providing a plurality of types of brushes to allow the user to select a brush among the plurality of types of brushes for performing the erasing action.

4. The method for displaying the image according to claim 1, wherein after the hiding a portion of the top-layer image that is within the region of interest to display a portion of the bottom-layer image that is within the region of interest, the method further comprises:
receiving a restoration instruction sent by the user, and re-overlaying the hidden portion of the top-layer image on the displayed portion of the bottom-layer image, to re-display the top-layer image completely.

5. The method for displaying the image according to claim 1, wherein the determining one of the visible light image and the infrared image as a top-layer image and the other of the visible light image and the infrared image as a bottom-layer image, and overlaying the top-layer image on the bottom-layer image to display the top-layer image on a display screen, comprises:
determining the visible light image as the top-layer layer image and the infrared image as the bottom-layer image, and overlaying the visible light image on the infrared image to establish a first display mode;
determining the infrared image as the top-layer image and the visible light image as the bottom-layer image, and overlaying the infrared image on the visible light image to establish a second display mode; and
receiving a display mode selection instruction sent by the user, and displaying on the display screen in a display mode selected from the first display mode and the second display mode according to the display mode selection instruction.

6. The method for displaying the image according to claim 1, wherein the acquiring a visible light image and an infrared image of a target scene comprises:
acquiring the visible light image and the infrared image of the target scene captured by a dual-light imaging device;
or,
acquiring the visible light image of the target scene captured by a visible light device, and acquiring the infrared image of the target scene captured by a thermal imaging device.

7. The method for displaying the image according to claim 1, wherein when the hiding a portion of the top-layer image that is within the region of interest to display a portion of the bottom-layer image that is within the region of interest, the method further comprises:
downsizing at least one of the visible light image and the infrared image; and
displaying the downsized image at a preset position outside the region of interest on the display screen.

8. An apparatus for displaying an image, comprising:
an acquisition module, configured to acquire a visible light image and an infrared image of a target scene;
a first display module, configured to determine one of the visible light image and the infrared image as a top-layer image and the other of the visible light image and the infrared image as a bottom-layer image, and overlay the top-layer image on the bottom-layer image to display the top-layer image on a display screen;
a determination module, configured to capture an erasing action of a user on the display screen, and determine a region of interest based on the erasing action; and
a second display module, configured to hide a portion of the top-layer image that is within the region of interest, to display a portion of the bottom-layer image that is within the region of interest.

9. A device for displaying an image, comprising:
a memory, configured to store a computer program; and
a processor, configured to perform, when executing the computer program, the method for displaying the image according to any one of claims 1 to 7.

10. A readable storage medium, wherein the readable storage medium stores a computer program, and the computer program, when executed by a processor, causes the processor to perform the method for displaying the image according to any one of claims 1 to 7.
